# EUROPÄISCHE PATENTSCHRIFT

(11) **EP 2 287 487 B1**
(45) Veröffentlichungstag und Bekanntmachung des Hinweises auf die Patenterteilung: **29.05.2013**
(21) Anmeldenummer: 10005733.0
(22) Anmeldetag: 02.06.2010
(51) Int. Cl.: F16D 25/08, F16D 25/10, B60K 6/387

(54) **Antriebsstrangmodul für ein Kraftfahrzeug**
Power transmission module for a motor vehicle
Module d'entraînement pour un véhicule automobile

(30) Priorität: 21.08.2009 DE 102009038344
(43) Veröffentlichungstag der Anmeldung: 23.02.2011
(73) Patentinhaber: Volkswagen Aktiengesellschaft, 38440 Wolfsburg (DE)
(72) Erfinder: Schmidt, Andreas, 32602 Vlotho (DE); Kolze, Fabian, 39179 Barleben (DE); Müller, Frank, 38165 Essenrode (DE)

(56) Entgegenhaltungen:
- EP-A1- 1 826 433
- EP-A2- 1 548 313
- DE-A1-102006 010 707
- DE-A1-102007 003 107
- DE-A1-102007 060 165
- US-A1- 2007 034 476

## Beschreibung

### Gebiet der Erfindung

Die Erfindung bezieht sich auf ein Antriebsstrangmodul für ein Kraftfahrzeug, umfassend
- ein äußeres Gehäuse,
- eine als Innenläufer ausgestaltete elektrische Maschine mit einem gehäusefesten Stator und einem radial innerhalb des Stators auf einem Rotorträger rotierbaren Rotor,
- eine Moduleingangswelle, die mit dem Rotor über eine Rotorkupplung koppelbar ist, wobei die Rotorkupplung als Lamellenkupplung, umfassend
   einen Außenlamellenträger mit einem Paket Außenlamellen,
   einen Innenlamellenträger mit einem mit dem Paket Außenlamellen geschachtelten Paket Innenlamellen und
   eine die Lamellenpakete axial druckbeaufschlagende Betätigungsvorrichtung, ausgestaltet ist,
- eine erste Modulausgangswelle, die über eine erste Schaltkupplung mit dem Rotor koppelbar ist, wobei die erste Schaltkupplung als Lamellenkupplung, umfassend einen Außenlamellenträger mit einem Paket Außenlamellen,
   einen Innenlamellenträger mit einem mit dem Paket Außenlamellen geschachtelten Paket Innenlamellen und
   eine die Lamellenpakete axial druckbeaufschlagende Betätigungsvorrichtung, ausgestaltet ist,
- eine zweite Modulausgangswelle, die über eine zweite Schaltkupplung mit dem Rotor koppelbar ist, wobei die zweite Schaltkupplung als Lamellenkupplung, umfassend einen Außenlamellenträger mit einem Paket Außenlamellen,
   einen Innenlamellenträger mit einem mit dem Paket Außenlamellen geschachtelten Paket Innenlamellen und
   eine die Lamellenpakete axial druckbeaufschlagende Betätigungsvorrichtung, ausgestaltet ist.

### Stand der Technik

Aus der DE 10 2007 003 107 A1 ist ein gattungsgemäßes Antriebsstrangmodul mit den Merkmalen des Oberbegriffs von Anspruch 1 bekannt.

Hybrid-Antriebsstränge für Kraftfahrzeuge sind seit langem bekannt. Die vorliegende Erfindung bezieht sich auf einen sogenannten Parallel-Hybriden, bei dem ein Verbrennungsmotor und eine elektrische Maschine in momentenadditiver Weise auf den Eingang einer Momenten- und/oder Drehzahlwandlereinheit einwirken. Bei derartigen Hybriden hat sich eine Bauform durchgesetzt, bei der der Verbrennungsmotor mittels einer Trennkupplung an- bzw. abkoppelbar ist. Dies hat beispielsweise beim rein elektrischen Betrieb oder im Fall der Bremskraftrekuperation den Vorteil, dass das Schleppmoment des Verbrennungsmotors, welches die Effizienz des Vorgangs mindernd würde, ausgeschaltet werden kann.

Wird als Momenten- und/oder Drehzahlwandlereinheit ein Mehrfachkupplungsgetriebe, insbesondere ein Doppelkupplungsgetriebe verwendet, bietet es sich an, dessen Schaltkupplungen zusammen mit der Trennkupplung in einem gemeinsamen Modul zu integrieren. Die Moduleingangswelle wird dann von der Kurbelwelle des Verbrennungsmotors oder von einem diese ankoppelnden Verbindungsstück gebildet; die Modulausgangswellen sind dann die Eingangswellen des nachgeschalteten Getriebes. Letztere werden durch geeignetes Kupplungsmanagement der in dem Modul enthaltenen Schaltkupplungen mit dem Moment der elektrischen Maschine und/oder der Verbrennungskraftmaschine beaufschlagt.

Die gattungsbildende Druckschrift offenbart ein solches Modul, bei dem die Trennkupplung den Rotorträger der elektrischen Maschine mit der Moduleingangswelle koppelt und daher nachfolgend als Rotorkupplung bezeichnet werden soll. Die Rotorkupplung und die beiden Schaltkupplungen eines Doppelkupplungsgetriebes sind zusammen mit der elektrischen Maschine in einem gemeinsamen Gehäuse integriert. Die elektrische Maschine ist als Innenläufermaschine ausgebildet, d.h. ihr Stator ist gehäusefest angeordnet und ihr Rotor rotiert radial innerhalb des Stators um die Zentralachse des Moduls. Die beiden Schaltkupplungen sind bei verschiedenen Ausführungsformen der genannten Druckschrift axial oder radial zueinander benachbart, liegen in jedem Fall jedoch radial innerhalb der Rotorkupplung. Sämtliche Elemente des bekannten Moduls sind "nass" ausgeführt.

Aus der DE 2007 060 165 A 1 ist ein ähnliches Antriebsstrangmodul bekannt, welches im Unterschied zu der vorgenannten Druckschrift eine axial versetzte Anordnung von Rotorkupplung einerseits und Schaltkupplungen andererseits offenbart. Weiter offenbart diese Druckschrift die Verwendung einer trockenen elektrischen Maschine, die gegen die nassen Kupplungen in einem abgedichteten Gehäusekompartiment umläuft. Gemeinsam ist den bekannten Antriebsstrangmodulen die klassische, hydraulische Kupplungsansteuerung, bei der gegeneinander ganz oder teilweise abgedichtete Scheiben Druckräume bilden, die mit unter Druck stehendem Hydrauliköl gespeist werden können, sodass jeweils wenigstens eine der Druckraumbegrenzungsscheiben, die axial beweglich angeordnet ist, bei Druckbeaufschlagung verschoben wird. Diese Verschiebung wird an eine Druckplatte übertragen, die ihrerseits die Lamellenpakete der jeweils zugeordneten Kupplung mit einem Axialdruck beaufschlagt, sodass der Grad der Momentenübertragung in der Kupplung gesteuert werden kann. Antagonistisch zu der hydraulischen Druckbeaufschlagung ist typischerweise eine Federspannung vorgesehen, die die Druckplatte im unbetätigten Zustand in einer definierten Position hält. Problematisch bei dieser Art der hydraulischen Ansteuerung ist die Speisung der Druckräume mit dem Hydrauliköl, da die den Druckraum begrenzenden Scheiben mit der Rotation der Kupplung bzw. der gekoppelten Wellen umlaufen müssen, die Öl- und Druckquellen jedoch relativ zum Modulgehäuse festgelegte Elemente darstellen. Typischerweise wird dieses Problem dadurch gelöst, dass wenigstens eine der Zentralwellen des Moduls axial verlaufende Ölkanäle aufweist, die über sogenannte Drehdurchführungen, welche mittels mitlaufender Ringdichtungen abgedichtet sind, mit den jeweiligen Druckräumen verbunden sind. Bei komplexen Kupplungssystemen ergibt sich hier zum einen ein erheblicher konstruktiver Aufwand. Zum anderen ergibt sich ein Leckageproblem der mitlaufenden Ringdichtungen. Dieses Problem wird durch wachsende Komplexität des Kupplungssystems weiter verschärft, da umso weniger Bauraum für Dichtungselemente zur Verfügung steht, je mehr Kupplungen angesteuert werden müssen. Eine weitere Verschärfung des Leckageproblems tritt bei Verwendung moderner Hochdruckhydrauliksysteme mit ihren Drücken von bis zu 40 bar auf, die jedoch gerne genutzt werden, um kurze Schaltzeiten zu realisieren.

Aus der EP 1 826 433 A1 geht ein Doppelkupplungsgetriebe mit nasslaufenden Reibkupplungen hervor, welche zwei gehäusefeste Kolben/Zylinderanordnungen umfasst. In dieser Konfiguration sind keine Fliehkraftausgleichsräume und keine Drehdurchführung notwendig.

In der US 200710034476 A1 wird eine Anordnung für eine Doppelkupplung beschrieben, deren zwei Reibkupplungen radial gestaffelt angeordnet sind. Die konkrete konstruktive Ausführung, insbesondere die Betätigungsmechanik der zwei Reibkupplungen wird detailliert beschrieben.

### Aufgabenstellung

Es ist die Aufgabe der vorliegenden Erfindung, ein gattungsgemäßes Antriebsstrangmodul derart weiterzubilden, dass Leckageprobleme bei der Ansteuerung der Kupplungen reduziert werden.

### Darlegung der Erfindung

Diese Aufgabe wird in Verbindung mit den Merkmalen des Oberbegriffs von Anspruch 1 dadurch gelöst, dass die Betätigungsvorrichtung wenigstens einer Schaltkupplung einen gehäusefesten Ausrücker umfasst, dessen axial beweglicher Kolben über ein axiale Druckkräfte übertragendes und rotatorisch entkoppelndes Ringlager mit einer die zugeordneten Lamellenpakete mit den übertragenen Druckkräften axial beaufschlagenden Druckplatte verbunden ist. Dabei ist der Außenlamellenträger der Rotorkupplung an dem Rotorträger selbst und radial innerhalb des Rotors festgelegt.

Die Erfindung wendet sich ab von der bekannten Art der Kupplungsbetätigung über rotierende Druckräume mit wenigstens einer axial verschieblichen Wand und Speisung aus einer zentralen Ölführung über Drehdurchführungen. Die Erfindung sieht vielmehr vor, gehäusefeste Ausrücker zu verwenden, die über geeignete Ringlager an den Druckplatten der Kupplungen rotatorisch entkoppelt werden. Grundsätzlich können verschiedene Typen von Ausrückern, beispielsweise mechanische, elektromotorische oder elektromagnetische Hebel- und Kolbensysteme verwendet werden. Bevorzugt sind die Ausrücker jedoch als gehäusefeste Hydraulikzylinder ausgebildet. Die mit dem Gehäuse drehfest verbundenen, jedoch axial verschieblichen Kolben der bevorzugt verwendeten Hydraulikzylinder können leicht über feste Ölkanäle im Gehäuse angesteuert werden. Leckageprobleme ergeben sich hierbei nicht. Die axiale Bewegung wird an das Ringlager weitergegeben und von diesem auf die rotierende Druckplatte übertragen. Da das Ringlager keine Drehmomente übertragen kann, sind der Hydraulikkolben und die rotierende Druckplatte rotatorisch entkoppelt.

Die radiale Innenfläche des Rotorträgers, auf dessen radialer Außenfläche der Rotor festgelegt ist, dient als Außenlamellenträger einer konzentrisch zu dem Rotor radial innen angeordneten Rotorkupplung. Der korrespondierende Innenlamellenträger, der noch weiter radial innen angeordnet ist, ist drehfest mit der Moduleingangswelle verbunden. Der Rotorträger selbst ist gegenüber dem Gehäuse rotatorisch entkoppelt gelagert.

Außer der Lösung der Leckageprobleme weist die Erfindung zusätzlich den Vorteil eines Bauraumgewinns auf, da einige der ansonsten zur Bildung der Druckräume erforderlichen Scheiben nicht mehr benötigt werden. Auch vereinfacht sich die Gesamtkonstruktion erheblich, da auf Ölkanäle in den Zentralwellen wenigstens teilweise verzichtet und die Form der verbleibenden Scheiben, insbesondere der Druckplatten der Kupplungen, vereinfacht werden kann.

Besonders vorteilhafte Ausführungsformen und Weiterbildungen der Erfindung sind Gegenstand der nachgeordneten, abhängigen Ansprüche.

Als gehäusefeste Hydraulikzylinder kommen beispielsweise sogenannte CSC-Zylinder (concentric slave cylinder) in Frage Grundsätztich ist es durchaus möglich, neben den Schaltkupplungen auch die Rotorkupplung mittels eines gehäusefesten Hydraulikzylinders anzusteuern. In vielen Fällen ist es jedoch günstiger, wenn die Betätigungsvorrichtung der Rotorkupplung einen von gegenüber dem Gehäuse rotierbaren Scheiben begrenzten Druckraum umfasst, der über eine Drehdurchführung mit einem in der Moduleingangswelle ausgebildeten Hydraulikkanal in Verbindung steht, wobei eine der den Druckraum begrenzenden Scheiben axial verschieblich und mit einer die zugeordneten Lamellenpakete axial druckbeaufschlagenden Druckplatte verbunden ist. Mit anderen Worten wird bei dieser Ausführungsform die Rotorkupplung in der herkömmlichen Weise angesteuert. Dies kann günstig sein, da durch die erfindungsgemäße Ausgestaltung der Schaltkupplungen Raum auf der Moduleingangswelle zur Ausbildung von Ölkanälen frei wird, sodass die verbleibenden Ölkanäle größer und leckagefester ausgebildet werden können. Zudem ist bei der Rotorkupplung eine besonders schnelle und präzise Ansteuerung wie dies bei den Schaltkupplungen vorteilhaft ist, nicht erforderlich, sodass hier mit einem Niederdrucksystem gearbeitet werden kann, welches weniger anfällig für Leckageprobleme ist.

Günstigerweise sind sowohl der Rotor als auch die Kupplungen in einem gemeinsamen Nassraum angeordnet. Dies vereinfacht die Konstruktion und spart Bauraum gegenüber Varianten mit gegeneinander abgedichteten Teilräumen.

Wie aus dem Stand der Technik bekannt, ist es die Aufgabe der Kupplungsanordnung verschiedene Kraftflusswege zu realisieren. So koppelt bzw. entkoppelt die Rotorkupplung den Rotor und die Moduleingangswelle, d.h. die Verbrennungskraftmaschine. Die Schaltkupplungen koppeln bzw. entkoppeln die ihnen jeweils zugeordnete Modulausgangsweite mit dem Rotor und über diesen ggf. (bei geschlossener Rotorkupplung) mit der Moduleingangswelle. Es lassen sich somit folgende Kraftflusswege (mit entsprechenden Zwischenzuständen) realisieren:
Moduleingangswelle - Rotor - zweite Modulausgangswelle (gekoppeltes oder rein verbrennungsmotorisches Fahren);
Rotor - erste Modulausgangswelle (rein elektrisches Fahren);
Rotor - zweite Modulausgangswelle (rein elektrisches Fahren).

Bei allen Kraftflusswegen ist also der Rotor als zentrales Element involviert. Entsprechend ist es günstig, einen Lamellenträger wenigstens einer Schaltkupplung direkt an dem Rotorträger festzulegen. Bei einer ersten Ausführungsform ist vorgesehen, dass der Außenlamellenträger der ersten Schaltkupplung an den Rotorträger festgelegt, vorzugsweise direkt mit diesem verschweißt ist. Günstigerweise wird zusätzlich - jedoch auch alternativ möglich - der Außenlamellenträger der ersten Schaltkupplung mit dem Außenlamellenträger der zweiten Schaltkupplung über ein Leitblech drehfest verbunden. Dies erlaubt es, wie bei einer Weiterbildung der Erfindung vorgesehen, dass die zweite Schaltkupplung radial innerhalb der ersten Schaltkupplung angeordnet ist.

Alternativ zur drehfesten Kopplung der Außenlamellenträger der Schaltkupplungen mit dem Rotor kann bei einer anderen Ausführungsform der Erfindung vorgesehen sein, dass der Innenlamellenträger der ersten Schaltkupplung über ein Leitblech mit dem Rotorträger verbunden ist, wobei er zugleich als Außenlamellenträger der zweiten Schaltkupplung ausgebildet ist, die radial innerhalb der ersten Schaltkupplung angeordnet ist. Diese Variante erlaubt zwar nicht die günstige, direkte Anschweißung eines Lamellenträgers einer Schaltkupplung am Rotorträger; dafür wird aber einem Lamellenträger eine Doppelfunktion als Innenlamellenträger einer radial weiter außen angeordneten Schaltkupplung und als Außenlamellenträger einer radial weiter innen angeordneten Schaltkupplung zugewiesen. Dies kann zu einer beträchtlichen radialen Bauraumeinsparung führen.

Bei jeder der oben genannten Alternativen ist günstigerweise vorgesehen, dass die Druckplatte der ersten Schaltkupplung gegen das Leitblech federvorgespannt ist, sodass die erste Schaltkupplung im unbetätigten Zustand offen ist. Die Druckplatte der ersten Schaltkupplung kann das Leitblech bereichsweise durchsetzen. Die Durchsetzung ist insofern unproblematisch, als Leitblech und Druckplatte gemeinsam umlaufen, d.h. keine rotatorische Relativbewegung aufbringen müssen.

Auch für die zweite Schaltkupplung wird günstigerweise für den Fall der Nichtbetätigung eine definierte Position festgelegt. Insbesondere kann vorteilhafterweise vorgesehen sein, dass die Druckplatte der zweiten Schaltkupplung gegen einen radialen Fortsatz des Leitblechs federvorgespannt ist, sodass die zweite Schaltkupplung im unbetätigten Zustand offen ist. Die Druckplatte der zweiten Schaltkupplung durchsetzt bevorzugt den radialen Fortsatz des Leitblechs.

Günstigerweise sind die Schaltkupplungen axial versetzt zu dem Rotor angeordnet. Zwar ist auch eine konzentrische Anordnung der Schaltkupplungen und des Rotors möglich.

Dies vergrößert jedoch den radialen Bauraum erheblich. Ein weiterer Vorteil dieser Bauform ist ihre Modularität, die es erlaubt, ohne erheblichen Umkonstruktionsaufwand unterschiedlich große, d.h. leistungsstarke elektrische Maschinen einzusetzen. Elektrische Maschinen unterschiedlicher Leistung unterscheiden sich insbesondere in der axialen Länge ihrer Statoren bzw. Rotoren. Die Wahl einer anderen elektrischen Maschine kann bei dem erfindungsgemäßen Modul durch einfache Variation des Abstandes zwischen der Rotorkupplung und den Schaltkupplungen durchgeführt werden. Weitergehende Änderungen des Aufbaus sind nicht erforderlich. Als rein beispielhafte Kenndaten für verschiedene elektrische Maschinen kann angegeben werden: 125 V für einen sogenannten Mild-Hybriden, 200 V für einen Full-Hybriden und 370 V für einen Plug-In- Hybriden.

Schließlich sollte günstigerweise auch für die Rotorkupplung eine definierte Position für den Fall der Nichtbetätigung vorgesehen sein. Im Unterschied zu den Schaltkupplungen ist hier jedoch bevorzugt vorgesehen, dass die Druckplatte der Rotorkupplung gegen eine nicht axial verschiebliche Begrenzungsscheibe des Druckraumes federvorgespannt ist, sodass die Rotorkupplung im unbetätigten Zustand geschlossen ist. Dies hat den Vorteil, dass im Fall eines Ausfalls der Rotorkupplungsansteuerung und/oder der elektrischen Maschine noch immer rein verbrennungsmotorisch gefahren werden kann.

Weitere Merkmale und Vorteile ergeben sich aus der nachfolgenden, speziellen Beschreibung und den Zeichnungen.

### Kurzbeschreibung der Zeichnungen

Es zeigen:
- Fig. 1: eine Prinzipskizze einer ersten Ausführungsform der Erfindung,
- Fig. 2: eine Prinzipskizze einer alternativen Ausführungsform der Erfindung,
- Fig. 3: eine ausschnittsweise Konstruktionsskizze der Ausführungsform von Figur 1,
- Fig. 4: eine ausschnittsweise Konstruktionsskizze einer dritten Ausführungsform der Erfindung.

### Ausführliche Beschreibung bevorzugter Ausführungsformen

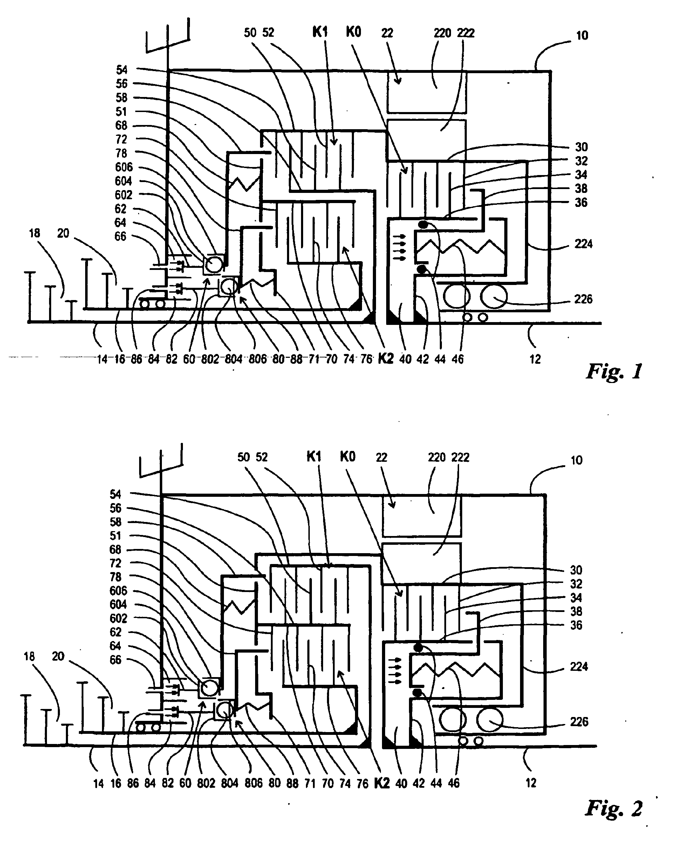

Figur 1 zeigt eine Prinzipskizze einer ersten, bevorzugten Ausführungsform der vorliegenden Erfindung. Die Darstellung beschränkt sich auf wesentliche Komponenten der Erfindung. Weitere Komponenten, die zum Verständnis der vorliegenden Erfindung nicht wesentlich beitragen, sind aus Gründen der Anschaulichkeit in Figur 1 nicht dargestellt.

Das erfindungsgemäße Antriebsstrangmodul umfasst ein äußeres Gehäuse 10, welches die wesentlichen Modulkomponenten enthält. Das Gehäuse 10 ist als Nassraum ausgebildet, in dem die enthaltenden Komponenten gemeinsam von Öl umspült werden.

In das Gehäuse 10 ragt eine Moduleingangswelle 12 hinein, welche beim typischen Anwendungsfall eine Verbrennungskraftmaschine ankoppelt. Gehäuseausgangsseitig sind zwei Modulausgangswellen 14 und 16 vorgesehen, die bei der gezeigten Ausführungsform konzentrisch zueinander verlaufen. Bei der typischen Anwendungsform bilden die Modulausgangswellen 14, 16 die beiden Getriebeeingangswellen eines Doppelkupplungsgetriebes, wobei einer der Wellen die geraden Gänge des Getriebes und der anderen Welle die ungeraden Gänge des Getriebes zugeordnet sind. Dies ist in Figur 1 durch die Ritzelpakete 18 und 20 angedeutet.

In dem Gehäuse 10 ist eine elektrische Maschine 22 angeordnet, deren Stator 220 drehfest mit dem Gehäuse 10 verbunden ist, und deren Rotor 222 axial innerhalb des Stators und zu diesem drehbeweglich angeordnet ist. Hierzu ist der Rotor 222 auf einem Rotorträger 224 festgelegt, der über ein Rotorlager 226, welches beispielsweise als Kugel- oder Zylinderrollenlager ausgebildet sein kann, gegen das Gehäuse 10 gelagert.

Aufgabe des erfindungsgemäßen Antriebsstrangmoduls ist es, je nach Bedarf einen Kraftfluss von der Moduleingangswelle 12 oder von dem Rotor 222 auf eine oder (in Schaltzwischenzuständen) beide der Modulausgangswellen 14, 16 zu lenken. Hierzu ist eine Rotorkupplung K0 vorgesehen, die den Rotor 222 mit der Moduleingangswelle 12 koppelt. Weiter ist eine erste Schaltkupplung K1 vorgesehen, die den Rotor 222 mit der ersten Modulausgangswelle 14 koppelt. Schließlich eine zweite Schaltkupplung K2 vorgesehen, die den Rotor 222 mit der zweiten Modulausgangswelle 16 koppelt.

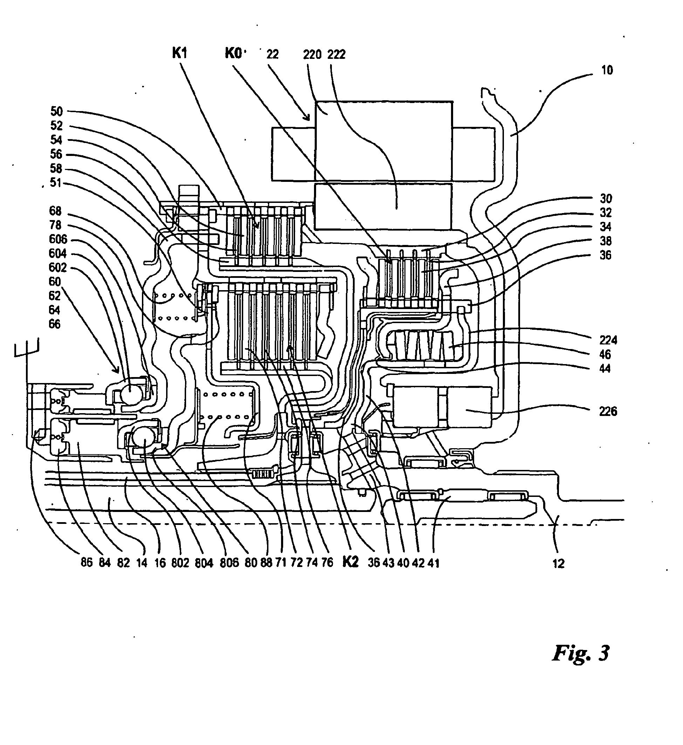

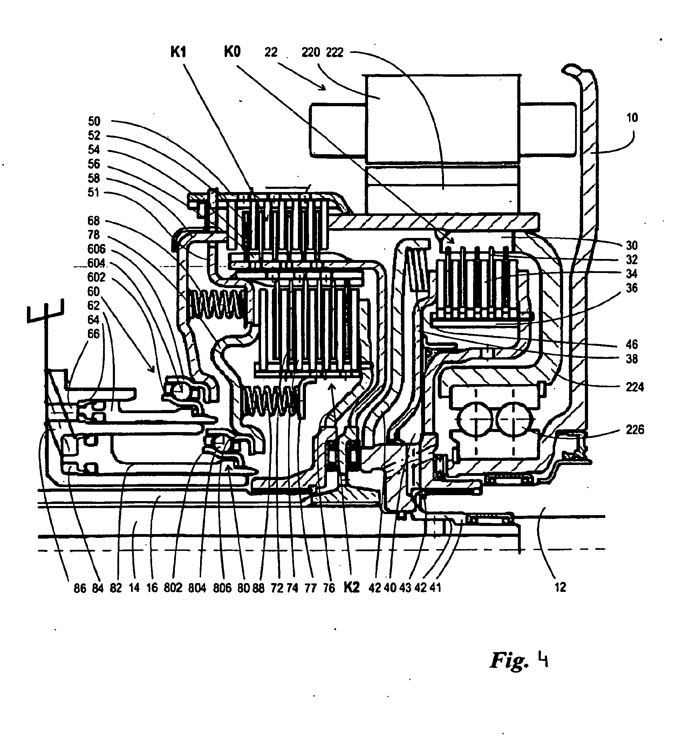

Die Rotorkupplung K0 ist als Lamellenkupplung ausgebildet, deren Außenlamellenträger 30, an welchem die Außenlamellen 32 axial verschieblich gelagert sind, unmittelbar radial innerhalb (unterhalb in Figur 1) des Rotors 222 am Rotorträger 224 festgelegt ist. Verschachtelt zu den Außenlamellen 32 ist ein Paket von Innenlamellen 34 axial verschieblich auf einem Innenlamellenträger 36 gelagert. Der Innenlamellenträger 36 ist drehfest mit der Moduleingangswelle 12 verbunden. Zur Betätigung der Rotorkupplung K0 ist eine Druckplatte 38 vorgesehen, welche relativ zu den Lamellenträgern 30, 36 axial beweglich ist und die Lamellen 32, 34 mit einem axialen Druck beaufschlagen kann, sodass eine Momentenübertragung ermöglicht wird. Ein Bereich der Druckplatte 38 bildet einen Teil einer Begrenzungswand eines Druckraumes 40, der über einen in Figur 1 nicht näher dargestellten Zufluss mit Hydrauliköl gespeist werden kann. Wie weiter unten im Zusammenhang mit den Figuren 3 und 4 näher beschrieben werden soll, besteht der Zufluss aus einer Drehdurchführung, die mit einem axialen Ölkanal in der Moduleingangswelle 12 verbunden ist. Eine weitere Wand des Druckraumes 40 wird von dem Fußbereich des Innenlamellenträgers 36 gebildet. Schließlich fungiert ein Teil eines ebenfalls drehfest mit der Moduleingangswelle 12 verbundenen Leitbleches 42 als weiterer nicht axial verschieblicher Wandteil des Druckraumes 40. Der den Druckraum 40 mit begrenzende Teil der Druckplatte 38 ist gegen die starren Wandbereiche des Druckraumes 40 mittels der Dichtungen 44 abgedichtet. Beaufschlagung des Druckraumes 40 mit hydraulischem Druck, d.h. Einspeisung von Hydrauliköl, verschiebt somit die Druckplatte 38 gegen die Kraft einer vorzugsweise als Tellerfeder ausgebildeten Druckfeder 46, welche sich gegen das Leitblech 42 abstützt. Bei der dargestellten Ausführungsform überführt die Druckfeder 46 die Druckplatte 38 im hydraulisch unbetätigten Zustand der Rotorkupplung K0 in eine Position, in der sie die Lamellen 32, 34 mit einem axialen Druck beaufschlagt, sodass die Kupplung im nicht betätigten Zustand geschlossen ist. Erst hydraulische Betätigung, d.h. Erhöhung des Drucks im Druckraum 40 durch Öleinspeisung verringert den von der Druckplatte 38 auf die Lamellen 32, 34 aufgebrachten Druck, sodass die Rotorkupplung K0 öffnet.

Axial versetzt zu der elektrischen Maschine und der konzentrisch zu dieser angeordneten Rotorkupplung K0 sind die beiden Schaltkupplungen K1 und K2 angeordnet, welche ein am Rotorträger 224 anliegendes Moment bedarfsgemäß auf die Modulausgangwellen 14, 16 übertragen. Hierzu ist ein Außenlamellenträger 50 der ersten Schaltkupplung K1 drehfest mit dem Rotorträger 224 verbunden, vorzugsweise unmittelbar verschweißt. Der Außenlamellenträger 50 trägt axial verschiebliche Außenlamellen 52, die mit einem Paket Innenlamellen 54 verschachtelt sind, wobei die Innenlamellen 54 auf einem axial innerhalb (unterhalb in Figur 1) des Außenlamellenträgers 50 angeordneten Innenlamellenträger 56 axial verschieblich angeordnet sind. Der Innenlamellenträger 56 ist drehfest mit der ersten Modulausgangswelle 14 verbunden. Zur Betätigung der ersten Schaltkupplung K1 ist eine Druckplatte 58 vorgesehen, welche die Lamellenpakete 52, 54 mit einem axialen Druck beaufschlagt, sodass diese ein Moment übertragen können. Die Druckplatte 58 ist über ein erstes Ringlager 60 mit dem Druckkolben 62 eines an dem Gehäuse 10 festgelegten Hydraulikzylinders 64 verbunden. Der Hydraulikzylinder 64, der bevorzugt als sogenannter CSC-Zylinder (concentric slave cylinder) ausgestaltet ist, wird über einen ebenfalls drehfest mit dem Gehäuse 10 verbundenen Ölkanal 66 gespeist. Zur Betätigung der ersten Schaltkupplung K1 wird der Hydraulikzylinder 64 mit hydraulischem Druck beaufschlagt, sodass sein Kolben 62 axial verschoben wird. Diese Axialverschiebung wird an den Außenring 602 des Ringlagers 60 und über dessen Wälzkörper 604 auch an dessen Innenring 606 weitergegeben. Dabei erfolgt jedoch eine rotatorische Entkopplung, sodass der Innenring 606 des Ringlagers 60 relativ zu dem gehäusefesten Außenring 602 rotieren kann. Der Innenring 606 ist fest mit der Druckplatte 58 verbunden, sodass über diese die ausgelöste Axialbewegung auf die Lamellen 52, 54 übertragen wird. Die Bewegung der Druckplatte 58 erfolgt gegen die Kraft einer Druckfeder 68, die sich zwischen der Druckplatte 58 und einem mit dem Außenlamellenträger 50 fest verbundenen Leitblech 51 abstützt. Die Druckplatte 58 durchsetzt das Leitblech51 bereichsweise.

Radial innerhalb (in Figur 1 unterhalb) der ersten Schaltkupplung K1 ist eine zweite Schaltkupplung K2 angeordnet, deren Außenlamellenträger 70 fest mit dem Leitblech 51 verbunden ist. Der Außenlamellenträger 70 der zweiten Schaltkupplung K2 trägt ein Paket axial beweglicher Außenlamellen 72, die versetzt zu einem Paket Innenlamellen 74 angeordnet sind, welche auf einem weiter radial innen liegenden Innenlamellenträger 76 axial beweglich gelagert sind. Zur Betätigung der zweiten Schaltkupplung 72 ist eine Druckplatte 78 vorgesehen, welche mit dem Innenenring 806 eines zweiten Ringlagers 80 fest verbunden ist. Das Ringlager 80 koppelt seinen Innenring 806 mit seinem Außenring 802, sodass eine axiale Kraftübertragung möglich ist, eine Drehmomentübertragung durch die Wälzkörper 804 des Ringlagers 80 jedoch unterbunden wird. Der Außenring 802 des Ringlagers 80 ist mit dem Druckkolben 82 eines vorzugsweise als CSC-Zylinder ausgebildeten Hydraulikzylinders 84 verbunden. Der gehäusefeste Hydraulikzylinder 84 wird über einen ebenfalls gehäusefesten Ölkanal 86 gespeist. Die Betätigung der zweiten Schaltkupplung K2 erfolgt analog zu der oben beschriebenen Funktionsweise der ersten Schaltkupplung K1. Auch die axiale Auslenkung der Druckplatte 78 erfolgt gegen die Kraft einer Druckfeder, nämlich die Feder 88, welche sich gegen einen radialen Fortsatz 71 des Leitbleches 51 abstützt.

Figur 2 zeigt eine alternative Ausführungsform der Erfindung. Zur Vermeidung von Wiederholungen soll hier lediglich auf die Unterschiede zu der Ausführungsform von Figur 1 eingegangen werden.

Im Gegensatz zur Ausführungsform von Figur 1 ist hier nicht der Außenlamellenträger 50 der ersten Schaltkupplung K1 sondern deren Innenlamellenträger 56 über das Leitblech 50 mit dem Rotorträger 224 verbunden. Der Außenlamellenträger 50 ist seinerseits mit der ersten Modulausgangswelle 14 drehfest verbunden. Der Innenlamellenträger 56 der ersten Schaltkupplung K1 dient zugleich als Außenlamellenträger 70 der zweiten Schaltkupplung K2. Im Übrigen entsprechen die Funktionen und Wirkungsweisen der Elemente der Ausführungsform gemäß Figur 2 denjenigen der Ausführungsform von Figur 1.

Figur 3 zeigt eine detailliertere, ausschnittsweise Konstruktionsskizze der Ausführungsform von Figur 1. Die einzelnen Elemente weisen dieselben Bezugszeichen auf, wie in Figur 1, sodass eine wiederholende Beschreibung unterbleiben kann. Lediglich die Ölzuführung zum Druckraum 40, die in Figur 1 nicht erkennbar war, soll näher diskutiert werden. Die Öleinspeisung erfolgt über einen axialen Ölkanal 41 in der Moduleingangswelle 12. Bei der gezeigten Ausführungsform setzt sich dieser Kanal in der hohl ausgebildeten ersten Modulausgangswelle 14 fort. Über eine Drehdurchführungshülse 43 ist der Kanal 41 mit dem Druckraum 40 verbunden.

Figur 4 schließlich zeigt eine dritte, alternative Ausführungsform der vorliegenden Erfindung. Gleiche oder äquivalente Elemente tragen in Figur 4 die gleichen Bezugszeichen wie in den zuvor diskutierten Figuren. So sind die Funktionen von Außen- und Innenlamellen der zweiten Schaltkupplung K2 gegenüber der Ausführungsform der Figuren 1 und 3 vertauscht. D.h. die axial äußersten Lamellen sind hier Innenlamellen und keine Außenlamellen wie in den zuvor diskutierten Ausführungsbeispielen. Hieraus ergibt sich, dass sich die Druckfeder 88 nicht gegen den Außenlamellenträger 70 sondern gegen den Innenlamellenträger 76 abzustützen hat, wozu ein eigenes Leitblech 77 vorgesehen ist. Hieraus ergibt sich der Vorteil, dass der radiale Fortsatz 71 des Leitbleches 58 entfallen kann.

Weiter ist die Druckfeder 46 der Rotorkupplung K0 bei der Ausführungsform gemäß Figur 4 axial benachbart zu dem zugehörigen Lamellenpaket angeordnet. Die Ausführungsform der Figuren 1 und 3, bei denen die Feder 46 radial benachbart zu den Lamellenpaketen angeordnet ist, wird derzeit als günstiger erachtet.

Natürlich stellen die in den Figuren gezeigten und in der speziellen Beschreibung diskutierten Ausführungsformen nur illustrative Ausführungsbeispiele der vorliegenden Erfindung dar. Dem Fachmann ist im Lichte der hiesigen Offenbarung ein breites Spektrum an Variationsmöglichkeiten anhand gegeben. Insbesondere kann die konkrete Ausgestaltung der Lamellenpakete, z.B. die verwendete Abfolge von Stahl- und Reiblamellen, an die Erfordernisse des jeweiligen Einzelfalls angepasst werden.

### Bezugszeichenliste

| | |
|---|---|
| 10 | Gehäuse |
| 12 | Moduleingangswelle |
| 14 | erste Modulausgangswelle |
| 16 | zweite Modulausgangswelle |
| 18 | erstes Teilgetriebe |
| 20 | zweites Teilgetriebe |
| 22 | elektrische Maschine |
| 220 | Stator von 22 |
| 222 | Rotor von 22 |
| 224 | Rotorträger |
| 226 | Rotorträgerlager |
| **K0** | Rotorkupplung |
| 30 | Außenlamellenträger von K0 |
| 32 | Außenlamellen von K0 |
| 34 | Innenlamellen von K0 |
| 36 | Innenlamellenträger von K0 |
| 38 | Druckplatte von K0 |
| 40 | Druckraum |
| 41 | Ölkanal |
| 42 | Leitblech |
| 43 | Drehdurchführungshülse |
| 44 | Dichtung |
| 46 | Druckfeder |
| **K1** | erste Schaltkupplung |
| 50 | Außenlamellenträger von K1 |
| 51 | Leitblech |
| 52 | Außenlamellen von K1 |
| 54 | Innenlamellen von K1 |
| 56 | Innenlamellenträger von K1 |
| 58 | Druckplatte von K1 |
| 60 | erstes Ringlager |
| 602 | Außenring von 60 |
| 604 | Wälzkörper von 60 |
| 606 | Innenring von 60 |
| 62 | Druckkolben |
| 64 | Hydraulikzylinder |
| 66 | Ölkanal |
| 68 | Druckfeder |
| **K2** | zweite Schaltkupplung |
| 70 | Außenlamellenträger von K2 |
| 71 | Leitblechfortsatz |
| 72 | Außenlamellen von K2 |
| 74 | Innenlamellen von K2 |
| 76 | Innenlamellenträger von K2 |
| 77 | Leitblech |
| 78 | Druckplatte von K2 |
| 80 | zweites Ringlager |
| 802 | Außenring von 80 |
| 804 | Wälzkörper von 80 |
| 806 | Innenring von 80 |
| 82 | Druckkolben |
| 84 | Hydraulikzylinder |
| 86 | Ölkanal |
| 88 | Druckfeder |

## Patentansprüche

1. Antriebsstrangmodul für ein Kraftfahrzeug, umfassend
- ein äußeres Gehäuse (10),
- eine als Innenläufer ausgestaltete elektrische Maschine (22) mit einem gehäusefesten Stator (220) und einem radial innerhalb des Stators (220) auf einem Rotorträger (224) festgelegten, rotierbaren Rotor (222),
- eine Moduleingangswelle (12), die mit dem Rotor (222) über eine Rotorkupplung (K0) koppelbar ist, wobei die Rotorkupplung als Lamellenkupplung, umfassend einen Außenlamellenträger (30) mit einem Paket Außenlamellen(32),
einen Innenlamellenträger (36) mit einem mit dem Paket Außenlamellen (32) geschachtelten Paket Innenlamellen (34) und
eine die Lamellenpakete (32, 34) axial druckbeaufschlagende Betätigungsvorrichtung, ausgestaltet ist,
- eine erste Modulausgangswelle (14), die über eine erste Schaltkupplung (K1) mit dem Rotor (222) koppelbar ist, wobei die erste Schaltkupplung (K1) als Lamellenkupplung, umfassend
einen Außenlamellenträger (50) mit einem Paket Außenlamellen (52),
einen Innenlamellenträger (56) mit einem mit dem Paket Außenlamellen (52) geschachtelten Paket Innenlamellen (54) und
eine die Lamellenpakete (52, 54) axial druckbeaufschlagende Betätigungsvorrichtung, ausgestaltet ist,
- eine zweite Modulausgangswelle (16), die über eine zweite Schaltkupplung (K2) mit dem Rotor (222) koppelbar ist, wobei die zweite Schaltkupplung (K2) als Lamellenkupplung, umfassend
einen Außenlamellenträger (70) mit einem Paket Außenlamellen (72),
einen Innenlamellenträger (76) mit einem mit dem Paket Außenlamellen (72) geschachtelten Paket Innenlamellen (74) und
eine die Lamellenpakete (72, 74) axial druckbeaufschlagende Betätigungsvorrichtung, ausgestaltet ist,
**dadurch gekennzeichnet,**
**dass** die Betätigungsvorrichtung wenigstens einer Schaltkupplung (K1; K2) einen gehäusefesten Ausrücker umfasst, dessen axial beweglicher Kolben (62; 68) über ein axiale Druckkräfte übertragendes und rotatorisch entkoppelndes Ringlager (60; 80) mit einer die zugeordneten Lamellenpakete (52, 54; 72, 74) mit den übertragenen Druckkräften axial beaufschlagenden Druckplatte (58; 78) verbunden ist, wobei der Außenlamellenträger (30) der Rotorkupplung (K0) an dem Rotorträger (224) und radial innerhalb des Rotors (222) festgelegt ist.

2. Antriebsstrangmodul nach Anspruch 1,
**dadurch gekennzeichnet,**
**dass** der Ausrücker als Hydraulikzylinder (64; 84) ausgebildet ist.

3. Antriebsstrangmodul nach einem der vorangehenden Ansprüche 1 oder 2,
**dadurch gekennzeichnet,**
**dass** die Betätigungsvorrichtung der Rotorkupplung (K0) einen von gegenüber dem Gehäuse (10) rotierbaren Scheiben begrenzten Druckraum (40) umfasst, der über eine Drehdurchführung (43) mit einem in der Moduleingangswelle (12) ausgebildeten Hydraulikkanal (41) in Verbindung steht, wobei eine der den Druckraum (40) begrenzenden Scheiben axial verschieblich und mit einer die zugeordneten Lamellenpakete (32, 34) axial druckbeaufschlagenden Druckplatte (38) verbunden ist.

4. Antriebsstrangmodul nach einem der vorangehenden Ansprüche,
**dadurch gekennzeichnet,**
**dass** sowohl der Rotor (222) als auch die Kupplungen (K0, K1, K2) in einem gemeinsamen Nassraum angeordnet sind.

5. Antriebsstrangmodul nach einem der vorangehenden Ansprüche,
**dadurch gekennzeichnet,**
**dass** der Außentamellenträger (50) der ersten Schaltkupplung (K1) an dem Rotorträger (224) festgelegt ist.

6. Antriebsstrangmodul nach einem der vorangehenden Ansprüche,
**dadurch gekennzeichnet,**
**dass** der Außenlamellenträger (50) der ersten Schaltkupplung (K1) mit dem Außenlamellenträger (70) der zweiten Schaltkupplung (K2) über ein Leitblech (51) drehfest verbunden ist.

7. Antriebsstrangmodul nach Anspruch 6,
**dadurch gekennzeichnet,**
**dass** die zweite Schaltkupplung (K2) radial innerhalb der ersten Schaltkupplung (K1) angeordnet ist.

8. Antriebsstrangmodul nach einem der Ansprüche 1 bis 4,
**dadurch gekennzeichnet,**
**dass** der Innenlamellenträger (56) der ersten Schaltkupplung (K1) über ein Leitblech (51) mit dem Rotorträger (224) verbunden ist, wobei er zugleich als Außenlamellenträger (70) der zweiten Schaltkupplung (K2) ausgebildet ist, die radial innerhalb der ersten Schaltkupplung (K1) angeordnet ist.

9. Antriebsstrangmodul nach einem der Ansprüche 6 bis 8,
**dadurch gekennzeichnet,**
**dass** die Druckplatte (58) der ersten Schaltkupplung (K1) gegen das Leitblech (51) federvorgespannt ist, sodass die erste Schaltkupplung im unbetätigten Zustand offen ist.

10. Antriebsstrangmodul nach einem der Ansprüche 6 bis 9,
**dadurch gekennzeichnet,**
**dass** die Druckplatte (58) der ersten Schaltkupplung das Leitblech (51) bereichsweise durchsetzt.

11. Antriebsstrangmodul nach einem der Ansprüche 6 bis 10,
**dadurch gekennzeichnet,**
**dass** die Druckplatte (78) der zweiten Schaltkupplung (K2) gegen einen radialen Fortsatz (71) des Leitblechs (51) federvorgespannt ist, sodass die zweite Schaltkupplung (K2) im unbetätigten Zustand offen ist.

12. Antriebsstrangmodul nach einem der Ansprüche 6 bis 11,
**dadurch gekennzeichnet,**
**dass** die Druckplatte der zweiten Schaltkupplung (K2) einen radialen Fortsatz (71) des Leitblechs (51) bereichsweise durchsetzt.

13. Antriebsstrangmodul nach einem der vorangehenden Ansprüche,
**dadurch gekennzeichnet,**
**dass** die Schaltkupplungen (K1, K2) axial versetzt zu dem Rotor (222) angeordnet sind.

14. Antriebsstrangmodul nach einem der vorangehenden Ansprüche,
**dadurch gekennzeichnet,**
**dass** eine Feder (46) der Rotorkupplung (K0) radial benachbart zu einem der Rotorkupplung (K0) zugehörigen Innenlamellenpaket (34) angeordnet ist.

15. Antriebsstrangmodul nach einem der vorangehenden Ansprüche,
**dadurch gekennzeichnet,**
**dass** die Druckplatte (38) der Rotorkupplung (K0) gegen eine nicht axial verschiebliche Begrenzungsscheibe (42) des Druckraumes fedeworgespannt ist, sodass die Rotorkupplung (K0) im unbetätigten Zustand geschlossen ist.

## Claims

1. Drive-train module for a motor vehicle, comprising
- an outer housing (10),
- an electric machine (22) which is configured as an internal-rotor motor and has a stator (220) which is fixed to the housing and a rotatable rotor (222) which is fixed on a rotor carrier (224) radially within the stator (220),
- a module input shaft (12) which can be coupled to the rotor (222) via a rotor clutch (K0), the rotor clutch being configured as a multiple disc clutch, comprising an outer disc carrier (30) with an assembly of outer discs (32), an inner disc carrier (36) with an assembly of inner discs (34) which is nested with the assembly of outer discs (32), and an actuating apparatus which loads the disc assemblies (32, 34) axially with pressure,
- a first module output shaft (14) which can be coupled to the rotor (222) via a first clutch (K1), the first clutch (K1) being configured as a multiple disc clutch, comprising an outer disc carrier (50) with an assembly of outer discs (52), an inner disc carrier (56) with an assembly of inner discs (54) which is nested with the assembly of outer discs (52), and an actuating apparatus which loads the disc assemblies (52, 54) axially with pressure,
- a second module output shaft (16) which can be coupled to the rotor (222) via a second clutch (K2), the second clutch (K2) being configured as a multiple disc clutch, comprising an outer disc carrier (70) with an assembly of outer discs (72), an inner disc carrier (76) with an assembly of inner discs (74) which is nested with the assembly of outer discs (72), and an actuating apparatus which loads the disc assemblies (72, 74) axially with pressure,
**characterized**
**in that** the actuating apparatus of at least one clutch (K1; K2) comprises a clutch operator which is fixed to the housing and the axially movable piston (62; 68) of which is connected, via a sleeve bearing (60; 80) which decouples rotationally and transmits axial pressure forces, to a pressure plate (58; 78) which loads the associated disc assemblies (52, 54; 72, 74) axially with the transmitted pressure forces, the outer disc carrier (30) of the rotor clutch (K0) being fixed on the rotor carrier (224) and radially within the rotor (222).

2. Drive-train module according to Claim 1, **characterized in that** the clutch operator is configured as a hydraulic cylinder (64; 84).

3. Drive-train module according to either of the preceding Claims 1 and 2, **characterized in that** the actuating apparatus of the rotor clutch (K0) comprises a pressure space (40) which is delimited by discs which can rotate with respect to the housing (10), which pressure space (40) is connected via a rotary leadthrough (43) to a hydraulic channel (41) which is formed in the module input shaft (12), one of the discs which delimit the pressure space (40) being axially displaceable and being connected to a pressure plate (38) which loads the associated disc assemblies (32, 34) axially with pressure.

4. Drive-train module according to one of the preceding claims, **characterized in that** both the rotor (222) and the clutches (K0, K1, K2) are arranged in a common wet space.

5. Drive-train module according to one of the preceding claims, **characterized in that** the outer disc carrier (50) of the first clutch (K1) is fixed on the rotor carrier (224).

6. Drive-train module according to one of the preceding claims, **characterized in that** the outer disc carrier (50) of the first clutch (K1) is connected fixedly via a guide plate (51) to the outer disc carrier (70) of the second clutch (K2) so as to rotate with it.

7. Drive-train module according to Claim 6, **characterized in that** the second clutch (K2) is arranged radially inside the first clutch (K1).

8. Drive-train module according to one of Claims 1 to 4, **characterized in that** the inner disc carrier (56) of the first clutch (K1) is connected via a guide plate (51) to the rotor carrier (224), the said inner disc carrier (56) being configured at the same time as the outer disc carrier (70) of the second clutch (K2) which is arranged radially inside the first clutch (K1).

9. Drive-train module according to one of Claims 6 to 8, **characterized in that** the pressure plate (58) of the first clutch (K1) is spring-preloaded against the guide plate (51), with the result that the first clutch is open in the non-actuated state.

10. Drive-train module according to one of Claims 6 to 9, **characterized in that** the pressure plate (58) of the first clutch penetrates the guide plate (51) in regions.

11. Drive-train module according to one of Claims 6 to 10, **characterized in that** the pressure plate (78) of the second clutch (K2) is spring-preloaded against a radial projection (71) of the guide plate (51), with the result that the second clutch (K2) is open in the non-actuated state.

12. Drive-train module according to one of Claims 6 to 11, **characterized in that** the pressure plate of the second clutch (K2) penetrates a radial projection (71) of the guide plate (51) in regions.

13. Drive-train module according to one of the preceding claims, **characterized in that** the clutches (K1, K2) are arranged offset axially with respect to the rotor (222).

14. Drive-train module according to one of the preceding claims, **characterized in that** a spring (46) of the rotor clutch (K0) is arranged radially adjacently to an inner disc assembly (34) which belongs to the rotor clutch (K0).

15. Drive-train module according to one of the preceding claims, **characterized in that** the pressure plate (38) of the rotor clutch (K0) is spring-preloaded against a delimiting disc (42) of the pressure space, which delimiting disc (42) cannot be displaced axially, with the result that the rotor clutch (K0) is closed in the non-actuated state.

## Revendications

1. Module d'entraînement pour un véhicule automobile, comprenant:
- un boîtier extérieur (10),
- une machine électrique (22) configurée en induit intérieur, avec un stator (220) solidaire du boîtier et un rotor tournant (222) fixé sur un support de rotor (224) radialement à l'intérieur du stator (220),
- un arbre d'entrée du module (12), qui peut être accouplé au rotor (222) au moyen d'un accouplement de rotor (K0) dans lequel l'accouplement de rotor est configuré comme un accouplement à lamelles, comprenant un support de lamelles extérieures (30) avec un paquet de lamelles extérieures (32), un support de lamelles intérieures (36) avec un paquet de lamelles intérieures (34) emboîté avec le paquet de lamelles extérieures (32) et un dispositif d'actionnement exerçant axialement une pression sur les paquets de lamelles (32, 34),
- un premier arbre de sortie du module (14), qui peut être accouplé au rotor (222) au moyen d'un premier embrayage (K1), dans lequel le premier embrayage (K1) est configuré comme un accouplement à lamelles, comprenant un support de lamelles extérieures (50) avec un paquet de lamelles extérieures (52), un support de lamelles intérieures (56) avec un paquet de lamelles intérieures (54) emboîté avec le paquet de lamelles extérieures (52) et un dispositif d'actionnement exerçant axialement une pression sur les paquets de lamelles (52, 54),
- un deuxième arbre de sortie du module (16), qui peut être accouplé au rotor (222) au moyen d'un deuxième embrayage (K2), dans lequel le deuxième embrayage (K2) est configuré comme un accouplement à lamelles, comprenant un support de lamelles extérieures (70) avec un paquet de lamelles extérieures (72), un support de lamelles intérieures (76) avec un paquet de lamelles intérieures (74) emboîté avec le paquet de lamelles extérieures (72) et un dispositif d'actionnement exerçant axialement une pression sur les paquets de lamelles (72, 74),
**caractérisé en ce que** le dispositif d'actionnement d'au moins un embrayage (K1; K2) comprend une butée de débrayage solidaire du boîtier, dont le piston mobile axialement (62; 68) est relié, au moyen d'un palier annulaire (60; 80) transmettant des forces de pression et se découplant en rotation, à une plaque de pression (58; 78) appliquant axialement aux paquets de lamelles associés (52, 54; 72, 74) les forces de pression transmises, dans lequel le support de lamelles extérieures (30) de l'accouplement de rotor (K0) est fixé sur le support de rotor (224) et radialement à l'intérieur du rotor (222).

2. Module d'entraînement selon la revendication 1, **caractérisé en ce que** la butée de débrayage est réalisée sous la forme d'un cylindre hydraulique (64; 84).

3. Module d'entraînement selon l'une des revendications précédentes 1 ou 2, **caractérisé en ce que** le dispositif d'actionnement de l'accouplement de rotor (K0) comprend une chambre de pression (40) limitée par des disques pouvant tourner par rapport au boîtier (10), laquelle est en communication par un passage rotatif (43) avec un canal hydraulique (41) formé dans l'arbre d'entrée du module (12), dans lequel un des disques limitant la chambre de pression (40) est mobile axialement et est relié à une plaque de pression (38) exerçant axialement une pression sur les paquets de lamelles associés (32, 34).

4. Module d'entraînement selon l'une quelconque des revendications précédentes, **caractérisé en ce qu'**aussi bien le rotor (222) que les accouplements (K0, K1, K2) sont disposés dans une chambre humide commune.

5. Module d'entraînement selon l'une quelconque des revendications précédentes, **caractérisé en ce que** le support de lamelles extérieures (50) du premier embrayage (K1) est fixé sur le support de rotor (224).

6. Module d'entraînement selon l'une quelconque des revendications précédentes, **caractérisé en ce que** le support de lamelles extérieures (50) du premier embrayage (K1) est relié de façon solidaire en rotation au support de lamelles extérieures (70) du deuxième embrayage (K2) au moyen d'une tôle de guidage (51).

7. Module d'entraînement selon la revendication 6, **caractérisé en ce que** le deuxième embrayage (K2) est disposé radialement à l'intérieur du premier embrayage (K1).

8. Module d'entraînement selon l'une quelconque des revendications 1 à 4, **caractérisé en ce que** le support de lamelles intérieures (56) du premier embrayage (K1) est relié au support de rotor (224) au moyen d'une tôle de guidage (51), dans lequel il est en même temps réalisé comme support de lamelles extérieures (70) du deuxième embrayage (K2), qui est disposé à l'intérieur du premier embrayage (K1).

9. Module d'entraînement selon l'une quelconque des revendications 6 à 8, **caractérisé en ce que** la plaque de pression (58) du premier embrayage (K1) est serrée par un ressort contre la tôle de guidage (51), de telle manière que le premier embrayage soit ouvert à l'état non actionné.

10. Module d'entraînement selon l'une quelconque des revendications 6 à 9, **caractérisé en ce que** la plaque de pression (58) du premier embrayage traverse localement la tôle de guidage (51).

11. Module d'entraînement selon l'une quelconque des revendications 6 à 10, **caractérisé en ce que** la plaque de pression (78) du deuxième embrayage (K2) est serrée par un ressort contre un prolongement radial (71) de la tôle de guidage (51), de telle manière que le deuxième embrayage (K2) soit ouvert à l'état non actionné.

12. Module d'entraînement selon l'une quelconque des revendications 6 à 11, **caractérisé en ce que** la plaque de pression du deuxième embrayage (K2) traverse localement un prolongement radial (71) de la tôle de guidage (51).

13. Module d'entraînement selon l'une quelconque des revendications précédentes, **caractérisé en ce que** les embrayages (K1, K2) sont disposés en décalage axial par rapport au rotor (222).

14. Module d'entraînement selon l'une quelconque des revendications précédentes, **caractérisé en ce qu'**un ressort (46) de l'accouplement de rotor (K0) est disposé radialement à proximité d'un paquet de lamelles intérieures (34) appartenant à l'accouplement de rotor (K0).

15. Module d'entraînement selon l'une quelconque des revendications précédentes, **caractérisé en ce que** la plaque de pression (38) de l'accouplement de rotor (K0) est serrée par un ressort contre un disque de limitation (42) non mobile axialement de la chambre de pression, de telle manière que l'accouplement de rotor (K0) soit fermé à l'état non actionné.
